# FASCICULE DE BREVET EUROPEEN

(11) **EP 2 394 913 B1**
(45) Date de publication et mention de la délivrance du brevet: **23.01.2013**
(21) Numéro de dépôt: 11169002.0
(22) Date de dépôt: 07.06.2011
(51) Int. Cl.: B64C 25/40

(54) **Aéronef équipé d'un dispositif de déplacement autonome**
Luftfahrzeug, das mit einer autonomen Bewegungsvorrichtung ausgestattet ist
Aircraft provided with an independent movement device

(30) Priorité: 10.06.2010 FR 1054604
(43) Date de publication de la demande: 14.12.2011
(73) Titulaire: Messier-Bugatti-Dowty, 78140 Velizy Villacoublay (FR)
(72) Inventeur: Delloue, David, 92350 Le Plessis-Robinson (FR); Charuel, Hervé, 91620 Nozay (FR)
(74) Mandataire: Parzy, Benjamin Alain

(56) Documents cités:
- WO-A1-95/29094
- US-A- 3 807 664
- US-B1- 6 193 326

## Description

L'invention est relative à un aéronef équipé d'un dispositif de déplacement autonome.

### ARRIERE-PLAN TECHNOLOGIQUE DE L'INVENTION

Il a été proposé d'équiper des atterrisseurs d'aéronefs avec des dispositifs de déplacement autonome comportant des moteurs électriques disposés au plus près des roues portées par les atterrisseurs pour entraîner les roues en rotation et ainsi provoquer le déplacement de l'aéronef, sans l'aide des propulseurs de l'aéronef.

Il serait tentant d'équiper les roues de moteurs hydrauliques, qui peuvent être utilisés à la fois pour provoquer le déplacement de l'aéronef, mais également pour freiner celui-ci, un peu comme sur les engins de chantier équipés de telles roues motorisées, et qui font appel à une transmission hydrostatique.

Cependant, l'utilisation de telles roues suppose qu'une source de pression hydraulique soit disponible. Sur un aéronef, les pompes générant la pression hydraulique sont entraînées par les propulseurs de l'aéronef, ce qui impose donc que les propulseurs soient activés lorsque l'aéronef se déplace, même s'ils tournent au ralenti. Cependant, l'on sait que la poussée résiduelle des propulseurs tournant au ralenti est suffisamment importante pour faire avancer l'aéronef, ce qui oblige à freiner constamment les roues pour maintenir l'aéronef immobile.

Il a été proposé, dans le document WO2010/0046520 de former un circuit hydraulique auxiliaire dont une pompe est actionnée au moyen de l'unité de puissance auxiliaire (ou APU pour « auxiliary power unit ») de l'aéronef. La pompe peut être mécaniquement entraînée par un arbre de l'APU, ou encore comporter un moteur électrique alimenté par l'énergie électrique fournie par un alternateur entraîné par l'APU. Ainsi, les dispositifs de déplacement autonome peuvent être alimentés hydrauliquement au moyen d'un circuit hydraulique auxiliaire pressurisé par une pompe auxiliaire activée au moyen de l'APU, ce qui permet de déplacer l'aéronef sans l'aide des propulseurs.

Cependant, les freins à frictions qui équipent l'aéronef sont également à activation hydraulique. On sait que les freins sont alimentés par les circuits hydrauliques principaux de l'aéronef. Certains aéronefs sont équipés d'un circuit hydraulique alternatif, prenant le relais des circuits principaux lorsque ceux-ci sont défaillants ou inactivés. Le circuit de freinage alternatif comporte un accumulateur qui permet d'effectuer un nombre limité de freinages lorsque le circuit de freinage alternatif n'est pas pressurisé, notamment lorsque les propulseurs sont arrêtés. Cependant, le nombre de freinages possible est très limité. Une solution immédiate pour augmenter le nombre de freinages possibles serait d'augmenter la taille de l'accumulateur, ce qui s'avère rapidement pénalisant en masse.

Par ailleurs le document US 3 807 664 décrit un aéronef équipé d'un circuit de freinage et d'un circuit d'alimentation de moyens de déplacement autonome.

Ces deux circuits sont alimentés en pression soit par une pompe de l'aéronef entraînée par les moteurs de celui-ci, soit par une pompe auxiliaire entraînée par l'APU.

### OBJET DE L'INVENTION

Un but de l'invention est d'améliorer l'organisation hydraulique de l'aéronef pour permettre un nombre de freinage important lors de phases de déplacement autonome.

### BREVE DESCRIPTION DE L'INVENTION

En vue de la réalisation de ce but, on propose un aéronef portant des roues équipées de moyens de freinage à friction actionnés hydrauliquement ainsi que des moyens de déplacement autonome actionnés hydrauliquement pour entraîner les roues en rotation et ainsi permettre un déplacement de l'aéronef lors d'une phase de déplacement autonome lors de laquelle des propulseurs de l'aéronef sont inactifs. Selon l'invention, l'aéronef est équipé d'au moins :
- un circuit hydraulique principal comportant une source de pression, qui alimente les moyens de freinage lorsque ladite source de pression est active ;
- un circuit de freinage alternatif pour permettre un actionnement des moyens de freinage au moins lorsque les propulseurs de l'aéronef sont arrêtés, le circuit de freinage alternatif comportant un accumulateur normalement utilisé pour le freinage de parc ; et
- un circuit hydraulique auxiliaire pressurisé par des moyens de pompage auxiliaire activés par l'unité de puissance auxiliaire ou APU de l'aéronef pour permettre un actionnement des moyens de déplacement autonome, le circuit de freinage alternatif comportant un accumulateur (24) normalement utilisé pour le freinage de parc et étant maintenu en pression par la source de pression (21) du circuit principal lorsque ladite source de pression est active ; et ;
- le circuit hydraulique auxiliaire étant connecté au circuit de freinage alternatif pour maintenir une pression de service dans l'accumulateur du circuit de freinage alternatif.

On sait en effet que l'accumulateur du circuit de freinage alternatif est regonflé par les pompes des circuits hydrauliques principaux de l'aéronef à chaque vol. Cet accumulateur sert à alimenter les freins lorsque le ou les circuits hydrauliques principaux sont défaillants ou inactifs. Cet accumulateur permet alors une immobilisation de l'aéronef par l'intermédiaire d'un freinage de parc. Ce freinage de parc peut être utilisé comme freinage ultime lorsque toute source de pression a été perdue. On pourrait penser utiliser cet accumulateur comme source de pression pour effectuer des freinages à l'aide du circuit de freinage alternatif. Or à chaque fois que le pilote freine et relâche les pédales, une partie du fluide délivré par l'accumulateur est reversé dans la bâche des circuits principaux de l'aéronef, de sorte que l'accumulateur se vide inexorablement à chaque utilisation des freins. On sait que cet accumulateur est en général dimensionné pour permettre au pilote de donner quelques coups de freins. Cependant, grâce aux dispositions de l'invention, l'accumulateur du circuit alternatif est maintenu constamment gonflé par le circuit hydraulique auxiliaire lors des phases de décélération, ce qui permet d'utiliser à volonté les freins lors d'une phase de déplacement autonome.

### BREVE DESCRIPTION DES FIGURES

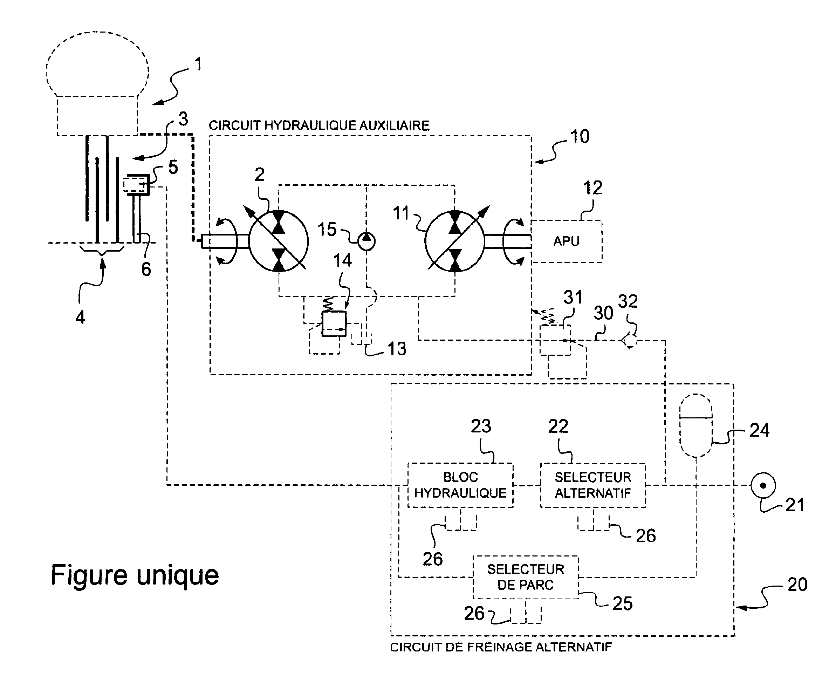

L'invention sera mieux comprise à la lumière de la description qui suit de l'unique figure qui est un schéma partiel du circuit hydraulique d'un aéronef illustrant les dispositions de l'invention.

### DESCRIPTION DETAILLEE DES FIGURES

L'invention est ici illustrée en application à un aéronef comportant des roues équipées dispositifs de déplacement autonome sous la forme de moteurs hydrauliques, et des roues équipées de dispositifs de freinage sous la forme de freins à friction actionnés hydrauliquement. Le cas échéant, certaines des roues, voire toutes les roues portées par les atterrisseurs principaux de l'aéronef, comme envisagé ici, peuvent être équipées simultanément d'un dispositif de déplacement autonome et d'un dispositif de freinage.

Comme cela est illustré sur la figure, l'aéronef comporte des roues 1 (celles qui sont portées par les atterrisseurs principaux) équipées chacune d'un moteur hydraulique 2, par exemple un moteur de type à pistons radiaux. On a représenté symboliquement par un trait mixte fort la liaison mécanique entre la roue 1 et l'arbre tournant du moteur hydraulique 2. Les roues 1 sont également équipées de freins à friction 3 comportant des disques de friction 4 dont certains tournent avec la roue et d'autres ne tournent pas avec la roue, les disques étant sélectivement pressés les uns contre l'autre au moyen d'actionneurs hydrauliques 5 portés par une couronne hydraulique 6.

L'aéronef comporte généralement au moins un circuit hydraulique principal, non représenté sur les figures, et pressurisé par une pompe entraînée par l'un des propulseurs de l'aéronef, la pompe puisant le fluide dans une bâche principale de l'aéronef. Le circuit hydraulique principal est utilisé pour pressuriser les actionneurs hydrauliques des freins à friction.

Il est connu d'équiper l'aéronef d'un circuit de freinage alternatif 20, qui est normalement maintenu en pression par une source de pression 21 de l'aéronef (par exemple une pompe entrainée par l'un des propulseurs). Le circuit de freinage alternatif 20 prend le relais du ou des circuits principaux lorsqu'ils sont défaillants ou inactifs. Le circuit de freinage alternatif 20 comporte un sélecteur de freinage alternatif 22, qui autorise l'admission de la pression dans un bloc hydraulique alternatif 23 qui régule la pression à transmettre aux actionneurs hydrauliques 5 venant presser entre eux les disques de friction 4, dont certains sont fixes et d'autres sont liés en rotation à la roue. Le circuit de freinage alternatif 20 comporte par ailleurs un accumulateur 24 qui, par l'intermédiaire d'un sélecteur de parc 25, permet d'appliquer sur les disques 4 un effort de parc correspondant à la pression régnant dans l'accumulateur 24. Il est connu qu'en cas de défaillance des sources de pression de l'aéronef, le freinage de parc soit utilisé comme freinage ultime. A cet effet, l'accumulateur 24 est dimensionné pour permettre quelques freinages, avant que l'accumulateur ne se vide de son fluide hydraulique qui est déversé vers la bâche principale 26 de l'aéronef à chaque fois que le pilote relâche son effort sur les pédales de frein.

Les moteurs hydrauliques 2 formant les dispositifs de déplacement autonome sont alimentés par un circuit hydraulique auxiliaire 10 qui comporte une pompe 11 bidirectionnelle qui est reliée aux moteurs hydrauliques 2 par le circuit auxiliaire 10 pour former une transmission hydrostatique. Ici, la pompe 11 est entraînée mécaniquement par un arbre d'une unité de puissance auxiliaire 12 de l'aéronef. La pompe 11 est donc située à proximité de l'unité de puissance auxiliaire, dans la queue de l'aéronef, et le circuit hydraulique auxiliaire 10 s'étend pour transporter le fluide hydraulique depuis la queue de l'aéronef vers les moteurs hydrauliques 2 et retour.

Le circuit hydraulique auxiliaire est relié à une bâche auxiliaire 13, qui est ici distincte de la bâche principale 25 du circuit hydraulique principal et du circuit de freinage alternatif 20 de l'aéronef. Un dispositif de déviation 14 (en pointillés sur la figure) permet de prélever une partie du fluide du circuit hydraulique auxiliaire 10 pour le faire passer dans la bâche auxiliaire 13 et le réinjecter dans le circuit auxiliaire 10 au moyen d'une pompe de gavage 15, ce afin de refroidir le fluide et de compenser les éventuelles variations de volumes de fluide dues à la dilatation thermique ou à la compressibilité du fluide. Bien sûr, le circuit de gavage, bien connu en soi, est ici représenté de façon symbolique, et il est bien évident que l'on pourra prévoir un gavage sur l'autre ligne de la pompe, si la transmission hydraulique entre la pompe et le moteur hydraulique doit fonctionner dans les deux sens.

On pourra également équiper l'une des lignes de connexion entre la pompe et le moteur hydraulique d'un organe de restriction commandé pour organiser sélectivement une résistance à l'écoulement du fluide vers la pompe pour ralentir le moteur associé et ainsi contribuer au freinage de la roue. Cette résistance hydraulique permet de compenser la faible inertie de l'unité auxiliaire de puissance, et permet également d'assurer un freinage complémentaire au freinage assuré par les freins à friction.

Selon une disposition essentielle de l'invention, le circuit hydraulique auxiliaire 10 est utilisé pour maintenir la pression dans l'accumulateur 24 du circuit de freinage alternatif 20 au moins lorsque les groupes motopropulseurs de l'aéronef sont arrêtés et que les circuits hydrauliques principaux ne sont pas pressurisés.

En l'absence de pression provenant des sources de pression traditionnelles de l'aéronef, on profite des décélérations de l'aéronef lors desquelles la roue entraîne le moteur hydraulique 2 associé. Le fluide du circuit hydraulique auxiliaire est ainsi dérivé lors de ces phases via une ligne hydraulique 30 équipée d'un détendeur 31 et d'un clapet anti-retour 32 vers le circuit de freinage alternatif 20 pour regonfler l'accumulateur 24 et ainsi maintenir la pression de service et régénérer le volume de fluide contenu dans l'accumulateur 24 après chaque freinage. L'utilisation d'un détendeur est rendue nécessaire par le fait que la pression dans la liaison hydrostatique peut être bien plus importante que la pression régnant dans l'accumulateur.

Il est également possible de prélever le fluide qui est mis sous pression par la pompe bidirectionnelle 11 du circuit hydraulique auxiliaire 10 en aval de celle-ci pour être injecté dans le circuit de freinage alternatif 20, en amont des sélecteurs 22 et 25,

Le pilote peut donc à sa guise effectuer un certain nombre de freinages, alors que les propulseurs de l'aéronef sont arrêtés et les circuits hydrauliques principaux inopérants.

Ainsi, bien que le fluide de l'accumulateur 24 se vide dans la bâche principale 26 de l'aéronef à chaque fois que le pilote appuie sur les pédales de frein et relâche celles-ci, l'accumulateur 25 est en permanence maintenu gonflé grâce au circuit hydraulique auxiliaire 10. Le pilote peut dès lors freiner à volonté, sans être limité par la capacité de l'accumulateur 24 du circuit hydraulique alternatif. Bien évidemment, cette disposition provoque un transfert de fluide depuis la bâche auxiliaire 13 vers la bâche principale 26 à chaque actionnement des freins. Il conviendra dès lors de dimensionner la bâche auxiliaire pour éviter qu'elle ne soit vidée par les freinages opérés par le pilote.

L'invention n'est pas limitée à ce qui vient d'être décrit, mais englobe toute variante entrant dans le cadre défini par les revendications.

En particulier, bien que l'on ait illustré ici un circuit hydraulique auxiliaire dans lequel la ou les pompes sont entraînés mécaniquement par un arbre de l'unité auxiliaire de puissance, soit directement, soit par l'intermédiaire d'un réducteur, le circuit hydraulique auxiliaire pourra comporter, soit en complément des pompes à entraînement mécanique, soit en remplacement de celles-ci, une ou des électropompes alimentées en électricité par un générateur électrique entraîné par l'unité de puissance auxiliaire.

Bien que l'on ait indiqué ici que la bâche du circuit hydraulique auxiliaire était séparée de la bâche du circuit hydraulique principal, on pourra ne prévoir qu'une seule et même bâche.

## Revendications

1. Aéronef portant des roues équipées de moyens de freinage à friction (3,4,5) actionnés hydrauliquement ainsi que des moyens de déplacement autonome (2) actionnés hydrauliquement pour entraîner les roues en rotation et ainsi permettre un déplacement de l'aéronef lors d'une phase de déplacement autonome lors de laquelle des propulseurs de l'aéronef sont inactifs, **caractérisé en ce que** l'aéronef est équipé d'au moins:
- un circuit hydraulique principal comportant une source de pression (21) qui alimente les moyens de freinage lorsque ladite source de pression est active ;
- un circuit de freinage alternatif (20) pour permettre un actionnement des moyens de freinage au moins lorsque les propulseurs de l'aéronef sont arrêtés, le circuit de freinage alternatif comportant un accumulateur (24) normalement utilisé pour le freinage de parc et étant maintenu en pression par la source de pression (21) du circuit principal lorsque ladite source de pression est active ; et
- un circuit hydraulique auxiliaire (10) pressurisé par des moyens de pompage (11) auxiliaires activés par une unité de puissance auxiliaire (12) ou APU de l'aéronef pour permettre un actionnement des moyens de déplacement autonome;
le circuit hydraulique auxiliaire étant connecté au circuit de freinage alternatif pour maintenir une pression de service dans l'accumulateur du circuit de freinage alternatif.

2. Aéronef selon la revendication 1, dans lequel le circuit hydraulique auxiliaire et le circuit de freinage alternatif sont reliés au moyen d'une liaison hydraulique comportant un détendeur.

## Claims

1. An aircraft having wheels fitted with hydraulically-actuating friction brake means (3, 4, 5) and also hydraulically-actuated independent drive means (2) for driving the wheels in rotation and enabling the aircraft to move in stages of independent drive in which the engines of the aircraft are inactive, the aircraft being **characterized in that** it is fitted with at least:
· a main hydraulic circuit including a pressure source (21) that powers the brake means when said pressure source is active;
· an alternative braking circuit (20) for enabling brake means to be actuated at least when the engines of the aircraft are stopped, the alternative braking circuit including an accumulator (24) that is normally used for parking braking and that is kept under pressure by the pressure source (21) of the main circuit when said pressure source is active; and
· an auxiliary hydraulic circuit (10) pressurized by auxiliary pump means (11) activated by an auxiliary power unit (12) of the aircraft to enable the independent drive means to be actuated;
the auxiliary hydraulic circuit being connected to the alternative braking circuit to maintain an operating pressure in the accumulator of the alternative braking circuit.

2. An aircraft according to claim 1, wherein the auxiliary hydraulic circuit and the alternative braking circuit are connected together by means of a hydraulic connection including an expander.

## Patentansprüche

1. Luftfahrzeug, umfassend Räder, die mit Mitteln zur Reibungsbremsung (3, 4, 5) ausgestattet sind, die hydraulisch betätigt werden sowie Mittel zur autonomen Bewegung (2), die hydraulisch betätigt werden, um die Räder in Rotation zu bringen und so eine Bewegung des Luftfahrzeugs während einer Phase autonomer Bewegung zu erlauben, während die Triebwerke des Luftfahrzeugs inaktiv sind, **dadurch gekennzeichnet, dass** das Luftfahrzeug ausgestattet ist mit mindestens:
- einem hydraulischen Hauptkreislauf, der eine Druckquelle (21) umfasst, die die Bremsmittel speist, wenn die besagte Druckquelle aktiv ist;
- einem alternativen Bremskreislauf (20) zum Ermöglichen einer Betätigung der Bremsmittel zumindest dann, wenn die Triebwerke des Luftfahrzeugs angehalten sind, wobei der alternative Bremskreislauf einen Akkumulator (24) umfasst, der normalerweise für die Parkbremsung eingesetzt wird und der durch die Druckquelle (21) des Hauptkreislaufes unter Druck gehalten wird, wenn die besagte Druckquelle aktiv ist; und
- einem zusätzlichen Hydraulikkreislauf (10), der durch zusätzliche Pumpmittel (11) mit Druck beaufschlagt wird, die durch eine zusätzliche Leistungseinheit (12) oder APU des Luftfahrzeugs aktiviert werden, um eine Betätigung der Mittel zur autonomen Bewegung zu ermöglichen; wobei der zusätzliche Hydraulikkreislauf mit dem alternativen Bremskreislauf verbunden ist, damit ein Betriebsdruck im Akkumulator des alternativen Bremskreislaufs aufrechterhalten wird.

2. Luftfahrzeug nach Anspruch 1, bei dem der zusätzliche Hydraulikkreislauf und der alternative Bremskreislauf durch eine Hydraulikverbindung verbunden sind, die einen Druckminderer umfasst.
